# EUROPÄISCHE PATENTSCHRIFT

(11) **EP 2 788 174 B1**
(45) Veröffentlichungstag und Bekanntmachung des Hinweises auf die Patenterteilung: **18.07.2018**
(21) Anmeldenummer: 12797859.1
(22) Anmeldetag: 03.12.2012
(51) Int. Cl.: B29C 70/34, B60B 5/02, B29L 31/32

(54) **RAD MIT RADSTERN UND DAS GEEIGNETE HERSTELLUNGSVERFAHREN**
WHEEL COMPRISING A WHEEL SPIDER, AND SUITABLE PRODUCTION METHOD
ROUE COMPORTANT UN CORPS DE ROUE À RAYONS ET PROCÉDÉ DE FABRICATION ADÉQUAT

(30) Priorität: 07.12.2011 DE 102011087938
(43) Veröffentlichungstag der Anmeldung: 15.10.2014
(73) Patentinhaber: ThyssenKrupp Carbon Components GmbH, 01723 Wilsdruff STT Kesselsdorf (DE)
(72) Erfinder: WERNER, Jens, 01640 Coswig (DE); KÖHLER, Christian, 01099 Dresden (DE); BARTSCH, André, 02747 Grosshennersdorf (DE); MÄKE, Sandro, 01796 Dohma (DE); DREßLER, Michael, 01307 Dresden (DE); LEPPER, Martin, 01279 Dresden (DE); HUFENBACH, Werner, 01324 Dresden (DE)
(74) Vertreter: Kailuweit & Uhlemann Patentanwälte Partnerschaft mbB
(86) Internationale Anmeldenummer: PCT/EP2012/074185
(87) Internationale Veröffentlichungsnummer: WO 2013/083500

(56) Entgegenhaltungen:
- DE-A1- 3 041 044
- DE-A1-102006 051 867
- DE-A1-102009 050 458
- US-A- 3 917 352
- US-A1- 2002 003 374

## Beschreibung

Gegenstand der vorliegenden Erfindung ist ein Rad insbesondere von Personenkraftwagen, der Speichen aus Faserverbundwerkstoff aufweist. Weiterhin wird ein Verfahren zur Herstellung eines derartigen Radsterns offenbart.

Eine übliche Radkonstruktion weist eine Felge auf, die aus Felgenbett und den Felgenhörnern besteht. Die Felgenhörner umlaufen das Felgenbett beidseitig, überragen dieses und bieten dem Reifen seitlichen Halt. Der Befestigung des Rades dient der Radstern oder die Radscheibe. Ein Radstern weist dabei Speichen oder sonstige Verbindungen von der Felge zur, im Mittelpunkt des Rades angeordneten, Nabe auf. Eine Radscheibe erfüllt dieselbe Aufgabe ohne Speichen, als vollflächige Verbindung der Felge zur Nabe.

Es ist ständiges Bemühen, der Weiterentwicklung der Automobiltechnik, das Gewicht der Fahrzeuge, insbesondere der ungefederten Massen zu reduzieren. Dazu bietet sich der Einsatz leichterer Materialien, insbesondere von Faserverbundwerkstoffen an.

Es existiert bereits eine Reihe von Ansätzen, mittels der Substitution von Metallspeichen durch Faserverbundmaterialien zur Gewichtsreduzierung beizutragen. Bei diesen Substitutionen dürfen jedoch die Stabilitätsanforderungen nicht in den Hintergrund treten.

Die US 4,681,647 schlägt vor, eine metallische Nabe mit einem ringförmigen umgebenden Element zu verbinden. Die Nabe wird dabei mit langen Verstärkungsfasern umwunden, die zwischen Nabe und äußerem Ring verlaufen oder die Nabe weist dazu stiftförmige Erhebungen auf, um die die Verstärkungsfasern herumgelegt und dann zum äußeren Ring geführt werden. Der äußere Ring wird selbst ein- oder mehrmals umwunden woraufhin die Verstärkungsfaser zurück zur Nabe geführt wird. Eine weitere Ausführungsform sieht ebenfalls auf dem äußeren Ring stiftförmige Erhebungen vor, die entsprechend umwunden werden. Die langen Verstärkungsfasern weisen eine Kunststoffimprägnierung auf und können nach Abschluss der Wicklung zwischen Nabe und Ring ausgehärtet werden. Sie bilden anschließend die Speichen eines Rades aus. Nachteilig an dieser Konstruktion ist, dass die Verstärkungsfasern unidirektional zwischen Nabe und Ring verlaufen und eine geringe Beständigkeit gegen Belastungen parallel zur axialen Richtung aufweisen. Der Herstellungsvorgang ist aufgrund der komplizierten Wicklungsherstellung kompliziert und langwierig.

In der DE 10 2006 051 867 A1 wird offenbart, wie ein Radstern aus einer Mehrzahl von Ringen aus einem faserverstärkten Material aufgebaut werden kann. Es werden mehrere Ringe aus Verstärkungsfasern in den Raum zwischen Felge und Nabe eingepasst. Die Ringe sind noch nicht ausgehärtet und deformieren sich zu kreissegmentartigen Formen mit abgerundeten Ecken. Der Kreisabschnitt des Kreissegments liegt formideal an der Felgeninnenfläche an, während die Sehnen der Kreissegmente einander berühren und nach der Konsolidierung die Speichen ausbilden. Die Verbindung der Kreissegmente untereinander bzw. mit der Felge erfolgt stoffschlüssig mittels Matrixmaterial. Nachteilig an dieser Konstruktion ist, dass die Ringe aus Verstärkungsfasermaterial unidirektional gewickelt sind und daher eine geringe Beständigkeit gegen Kräfte in axialer Richtung aufweisen. Darüber hinaus erlaubt der Aufbau der Speichen lediglich gerade, in der Ebene der Nabe liegende Konstruktionen.

Gegenstand der DE 30 41 044 A1 ist eine Schwungradkonstruktion. Die Speichen des Schwungrades sind dabei aus kreissektorförmig gewickelten Speichenringen aufgebaut. Es handelt sich hierbei um dieselbe Speichenkonstruktion wie sie bereits in der DE 10 2006 051 867 A1 offenbart wird.

Gegenstand der US 3 917 352 A ist ein Rad aus faserverstärktem Material. Die Faserverstärkung wird nach dem Stand der Technik als eine Vielzahl einzelner Filamente gewickelt bzw. geflochten. Der Kern weist dazu eine Reihe von Umlenkpunkten auf, an denen die Fasern anliegen und ihre Richtung ändern. Nicht offenbart ist jedoch die gemeinsame Führung einer Vielzahl von Fasern.

Gegenstand der DE 10 2009 050458 A1 ist ein Laufrad für ein Fahrrad. Die Speichen sind als faserverstärkte Polymerstränge ausgeführt, die von der Felge zur Nabe und zurück verlaufen. Dabei weist die Polymermatrix der Felge einen Duroplast-Werkstoff und die der Speiche einen Thermoplast-Werkstoff auf. Die Speichen sind als Stränge ausgeführt, deren Enden in der Felge befestigt sind, und die um die Achse herum verlaufen.

In der US 2002/003374 A1 wird eine Radkonstruktion für Autoräder vorgestellt, die Speichen und eine Felge umfasst. Die Speichen weisen ein Profilelement zur Übertragung der Kräfte zwischen der Nabe und der Felge auf. Zumindest ein Teil des genannten Profileelementes der genannten Radkonstruktion soll abnehmbar gestaltet sein und wenigstens teilweise aus Stahl bestehen.

Es stellt sich somit die Aufgabe, eine Radkonstruktion vorzuschlagen, die die Gewichtsvorteile einer Faserverbundbauweise mit einer guten Beständigkeit gegen axiale Belastungen verbindet. Eine weitere Aufgabe besteht darin, eine ästhetisch anspruchsvolle Gestaltung der Radkonstruktion zu ermöglichen.

Erfindungsgemäß wird diese Aufgabe mit einem Radstern für ein Rad nach Anspruch 1 gelöst. Ein Verfahren zur Herstellung eines solchen Rades wird in Anspruch 7 offenbart.

Das erfindungsgemäße Rad weist einen Radstern auf, dessen Speichen aus einem oder mehreren linear erstreckten Textilsträngen (auch: Textilstränge) als Verstärkungsmaterial eines Faserverbundwerkstoffs bestehen. Jeder linear erstreckte Textilstrang läuft mindestens einmal zwischen Felge und Nabe hin- und her und bildet dabei mindestens eine Speiche aus. Unter linear wird im Sinne dieser Anmeldung verstanden, dass der Textilstrang mindestens zwei Enden aufweist, die nicht miteinander verbunden sind. Der Textilstrang kann dabei in eine oder mehrere Richtungen ein- oder mehrmals gekrümmt sein.

Die linear erstreckten Textilstränge weisen Enden auf, die in einer Ebene parallel zur Achse des Rades geteilt, aufgespreizt und in zwei Drehrichtungen des Rades in der Felge formschlüssig befestigt sind, oder die linear erstreckten Textilstränge weisen Enden auf, die in einer Ebene senkrecht zur Achse des Rades geteilt, aufgespreizt und der Kontur der Innenseite der Felge in axialer Richtung folgend an dieser angelegt sind und so eine formschlüssige Befestigung bewirken.

In einer bevorzugten Ausführungsform bildet ein linear erstreckter Textilstrang eine Speiche des Rades aus. Die Enden des Textilstranges sind dabei im konsolidierten Zustand formschlüssig und bevorzugt auch stoffschlüssig an der Felge befestigt, während die Mitte des Textilstranges an der Nabe umgelenkt wird. Der Textilstrang bildet so zwei Teilstränge, die in ihrem Verlauf zwischen Nabe und Felge seitlich aneinander liegen und ohne Abstand bevorzugt auch durch das Matrixmaterial stoffschlüssig verbunden sind.

In einer weiteren bevorzugten Ausführungsform bildet der linear erstreckte Textilstrang zwei Speichen des Rades aus. Die Enden des Textilstranges sind im konsolidierten Zustand formschlüssig und bevorzugt auch stoffschlüssig an der Felge befestigt, während die Mitte des Textilstranges an der Nabe umgelenkt wird. In ihrem Verlauf zwischen Felge und Nabe sind die beiden Teilstränge getrennt und bilden einen Winkel mit dem Umkehrpunkt in der Nabe als Scheitelpunkt.

Ein Faserverbundwerkstoff besteht mindestens aus einem Matrixmaterial und Verstärkungsfasern, die die Belastungsfähigkeit des Faserverbundwerkstoffs in Richtung ihres Verlaufs verbessern. Unter konsolidieren bzw. Konsolidierung wird verstanden, dass der Faserverbundwerkstoff ausgehärtet wird. Dies kann teilweise geschehen (teilweise Konsolidierung) oder vollständig erfolgen. Unkonsolidiert ist der Faserverbundwerkstoff, wenn kein Verfestigungsprozess stattgefunden hat. Bei der Konsolidierung härtet das Matrixmaterial aus und schließt die Verstärkungsfasern ein und fixiert sie in ihrer Position.

Benachbarte Speichen verlaufen vorzugsweise in konstanten Winkeln zueinander und sind gleichmäßig über den gesamten Umfang des Radsterns verteilt. Eine weitere bevorzugte Ausführungsform sieht jedoch auch paarweise angeordnete Speichen mit einem kleineren eingeschlossenen Winkel und einem größeren Winkel zum nächsten Speichenpaar oder umgekehrt vor.

In einer weiteren bevorzugten Ausführungsform bildet der linear erstreckte Textilstrang mehr als zwei, jedoch immer eine gerade Anzahl von Speichen aus. Dazu sind die Enden des Textilstranges im konsolidierten Zustand formschlüssig und bevorzugt auch stoffschlüssig an der Felge befestigt, während er von der Befestigung des ersten Endes zur Nabe verläuft, dort umgelenkt wird und zurück zur Felge verläuft. Der Textilstrang folgt nunmehr der Krümmung der Felge an deren Innenseite in einer der Rotationsrichtungen, bis er erneut zur Nabe und von dieser zurück zur Felge verläuft. Dies erfolgt vorteilhaft so oft, bis die Zahl der vorgesehenen Speichen erreicht ist. Auf diese Weise werden die Speichen aus einem einzelnen linear erstreckten Textilstrang gebildet. Bevorzugt ist auch eine Mehrzahl von linear erstreckten Textilsträngen, wobei jeder Textilstrang oder auch nur einige der Textilstränge mehr als zwei Speichen einer Felge ausbildet.

Die Enden der Textilstränge sind bevorzugt umgelegt und folgen der Krümmung der Felge an deren Innenseite in einer der Rotationsrichtungen. Die Enden mehrerer benachbarter Textilstränge weisen bevorzugt einheitlich aufeinander zu oder voneinander weg.

Die linear erstreckten Textilstränge werden vorzugsweise als Gelege, Gewirke, Gestricke, Gewebe bzw. multiaxiale Textilien ausgeführt. Die Textilstränge bestehen bevorzugt auch aus mehreren Lagen, die vorteilhaft zusammengeheftet oder z. B. durch Sprühkleber zusammengehalten werden.

In einer besonders bevorzugten Ausführungsform sind die Textilstränge geflochten und weisen vorzugsweise mehrere Faserrichtungen auf. Bevorzugt verlaufen die Fasern in Winkeln von +-45° zur Achse einer Speiche. Die Ausrichtung der Textilstränge kann über die Länge variiert werden, so dass die für den Belastungsfall günstigste vorgesehen werden kann. Die Textilstränge werden dazu bevorzugt in einem dreidimensionalen Flechtprozess hergestellt. Vorteilhaft können so Textilstränge variabler Geometrie erzeugt werden. Die Textilstränge weisen so bevorzugt einen größeren Durchmesser in der Nähe der Nabe auf und können sich im Bereich der Befestigung an der Felge in zwei oder mehr Teiltextilstränge aufteilen und auch anschließend wieder zu einem Textilstrang zusammenlaufen.

Die Textilstränge bestehen aus Verstärkungsfasermaterial nach dem Stand der Technik. Bevorzugt sind hochfeste Fasermaterialien wie Glasfasern, Kohlefasern oder Kevlarfasern.

Die Nabe weist bevorzugt eine Achsbohrung und/oder Schraubenlöcher zur Befestigung des Rades auf. Darüber hinaus weist die Nabe weiterhin bevorzugt stiftförmige Erhebungen auf, um welche die Textilstränge herum unterbrechungsfrei verlaufen und durch die die Textilstränge umgelenkt werden. In einer besonders bevorzugten Ausführungsform sind die stiftförmigen Erhebungen so ausgebildet, dass an der Seite, die der geometrischen Achse der Nabe zugewandt ist, eine Rundung existiert, um die die Textilstränge herum verlaufen, wobei die Kraft vorteilhaft auf die gesamte Berührungsfläche von stiftförmiger Erhebung und Textilstrang verteilt wird. Der Teil, der stiftförmigen Erhebungen, der der Felge zugewandt ist, verläuft in seiner äußeren Oberfläche bevorzugt parallel zu der inneren Oberfläche der Felge. An der Stelle, an der die Textilstränge die Oberfläche der stiftförmigen Erhebungen passieren, sind die stiftförmigen Erhebungen etwas abgerundet, um eine Kerbwirkung der stiftförmigen Erhebung auf den Textilstrang zu vermeiden. Bevorzugt weist die Nabe alternierend stiftförmige Erhebungen mit um diese herum unterbrechungsfrei verlaufenden Textilsträngen und stiftförmige Erhebungen ohne Textilstränge auf. So hält lediglich jede zweite stiftförmige Erhebung einen Textilstrang, wobei jedoch durch die dazwischen angeordneten stiftförmigen Erhebungen die Anmutung einer geschlossenen Nabenoberfläche in Richtung der Felgeninnenseite erzielt wird. In einer bevorzugten Ausführungsform weist die Nabe lediglich stiftförmige Erhebungen auf, die auch Textilstränge halten, während die Zwischenräume zwischen den stiftförmigen Erhebungen mit den darum verlaufenden Textilsträngen mit Nabenmaterial ausgefüllt sind.

Die Naben sind vorzugsweise zweiteilig ausgeführt. Bevorzugt existiert ein erstes Nabenteil mit einer tellerförmigen unteren Deckscheibe, die optional neben Achsöffnung und/oder Schraubenöffnungen auch stiftförmige Erhebungen mit einer Höhe aufweist, die der Breite der Textilstränge entspricht. Das zweite Nabenteil weist dann lediglich optional Achsöffnung und/oder Schraubenöffnungen auf und wird auf dem ersten Nabenteil positioniert und dort fixiert. Auf diese Weise sind vorteilhaft die um die stiftförmigen Erhebungen herum verlaufenden Textilstränge axial fixiert und gegen Verschieben gesichert. Bevorzugt verlaufen die Schraubenlöcher durch die stiftförmigen Erhebungen.

Eine weitere bevorzugte Nabenform sieht vor, dass die linear erstreckten Textilstränge lediglich durch Ausnehmungen im Nabenmaterial geführt werden. Ein axiales Verrutschen wird durch oberhalb und unterhalb dieser Ausnehmungen angeordnete flächige, bevorzugt kreisscheibenfömige Begrenzungen der Nabenteile verhindert. Nach dem Konsolidieren der linear erstreckten Textilstränge und der Montage der Felge sind die linear erstreckten Textilstränge formschlüssig und optional über das Matrixmaterial auch stoffschlüssig, fixiert. Die Nabenteile weisen optional Achsöffnung und/oder Schraubenöffnungen auf.

Eine weitere bevorzugte Ausführungsform der Nabe sieht vor, erste und zweite Teile der Nabe auszuführen. Jedes Nabenteil weist dabei neben der optionalen Achsöffnung und/oder den optionalen Schraubenöffnungen einen Teil der stiftförmigen Erhebungen auf. In einer bevorzugten Ausführungsform sind 50% der Anzahl der stiftförmigen Erhebungen am ersten und 50% am zweiten Nabenteil angeordnet. In einer weiteren bevorzugten Ausführungsform weist jedes Nabenteil stiftförmige Erhebungen mit der Hälfte der Gesamthöhe auf, so dass nach einem Zusammenfügen der beiden Nabenteile die stiftförmigen Erhebungen in ihrer benötigten Gesamthöhe zur Verfügung stehen. Es ist für den Fachmann selbstverständlich, dass, wenn die Anzahl der stiftförmigen Erhebungen keine gerade Zahl ist, er die stiftförmigen Erhebungen möglichst gleichmäßig, bspw. alternierend auf die beiden Nabenteile verteilt. Ebenso ist es selbstverständlich, dass, wenn die Höhe einer stiftförmigen Erhebung eines Nabenteils 30% der notwendigen Gesamthöhe der stiftförmigen Erhebung beträgt dieser eine stiftförmige Erhebung auf dem anderen Nabenteil mit einer Höhe von 70% der Gesamthöhe gegenübersteht. Die Gesamthöhe der stiftförmigen Erhebungen zwischen den beiden Nabenteilen entspricht der Breite des Textilstranges der um sie herumläuft. Ebenso entspricht der Freiraum, der um die stiftförmigen Erhebungen herum durch das Material der Nabe verläuft der Höhe des umlaufenden Textilstranges.

Die Fixierung der beiden Nabenteile erfolgt vorzugsweise durch Verschrauben oder indem diese bei der Montage des Rades über die Schraubenlöcher zusammengehalten werden. In einer bevorzugten Ausführungsform besteht auch die Nabe aus Faserverbundwerkstoff und die beiden Nabenteile werden im Zuge der Konsolidierung des Faserverbundmaterials zusammengefügt und stoffschlüssig über das Matrixmaterial gehalten.

Bevorzugt besteht die Nabe aus Material, dass aus dem Stand der Technik für derartige Zwecke bekannt ist. Dies können z. B. Tiefziehstahl, Aluminium, Magnesium bzw. Leichtmetalllegierungen sein. Es kommt jedoch vorzugsweise auch faserverstärkter Kunststoff zum Einsatz.

Die Felge des Rades besteht in einer bevorzugten Ausführungsform aus Faserverbundmaterial. Besonders bevorzugt ist dabei eine mehrlagig geflochtene Faserverstärkung. Die Befestigung des Radsterns erfolgt vorzugsweise, indem die Enden der linear erstreckten Textilstränge und, falls vorhanden, die Abschnitte der linear erstreckten Textilstränge, die entlang der Innenseite der Felge verlaufen, überflochten werden und so im konsolidierten Zustand in die Felge hineinragen, ohne dass jedoch Fasern aus den Fasersträngen des Radsterns in Fasern der Faserverstärkung der Felge übergehen. Nach der Konsolidierung der Felge sind die Enden der Textilstränge und die entlang der Innenseite der Felge verlaufenden Teile der Textilstränge formschlüssig und ggf. über das Matrixmaterial auch stoffschlüssig in dem Felgenkörper fixiert.

Ein weitere bevorzugte Ausführungsform sieht vor, dass die Felge in ihrem inneren Umfang Sicken aufweist, in die die Enden der linear erstreckten Textilstränge und, falls vorhanden, die Abschnitte der linear erstreckten Textilstränge, die entlang der Innenseite der Felge verlaufen, hineinragen und in denen diese konsolidiert werden. Auf diese Weise kann vorteilhaft ein Radstern aus Faserverbundwerkstoff formschlüssig in einer Metallfelge befestigt werden.

Eine weitere bevorzugte Ausführungsform sieht vor, dass jeder linear erstreckte Textilstrang zwei Speichen ausbildet und dass jedes der beiden Enden des Textilstranges in zwei Einzelenden aufgeteilt ist.

In einer ersten Ausführungsform sind die Einzelenden in einer Ebene parallel zur Achse des Rades geteilt (bevorzugt bei 50% der Materialstärke). Sie werden an der Felgeninnenseite aufgespreizt und bilden nach dem Konsolidieren die formschlüssige Verbindung zwischen Radstern und Felge. Nach dem Aufspreizen folgen die beiden Enden der Krümmung der Felge an deren Innenseite in der und entgegen der Rotationsrichtungen des Rades. Zur Stabilisierung kann vorteilhaft in den V-förmigen Abschnitt zwischen den beiden Enden ein Formkörper eingelegt werden. Dieser Formkörper wird vorzugsweise durch einen verlorenen Kern ausgebildet. Der Formkörper besteht bevorzugt aus Schaummaterial.

Eine zweite bevorzugte Ausführungsform sieht vor, dass die Einzelenden in einer Ebene senkrecht zur Achse des Rades geteilt werden (ebenfalls bevorzugt bei 50% der Materialstärke der Textilstränge). Die Enden umfassen dann in beide axiale Richtungen einen Teil der Innenseite der Felge und folgen deren Kontur. Nach dem Konsolidieren der Textilstränge wird so die Felge durch die Enden aller Speichen formschlüssig gehalten. Diese Ausführungsform ist vorteilhaft für den Einsatz mit Metallfelgen geeignet. Vorteilhaft ist hier eine Ausbildung von Sicken im Felgenmaterial nicht notwendig.

Ein bevorzugtes Verfahren zur Herstellung der linear erstreckten Textilstränge sieht vor, diese durch Flechten herzustellen. Dabei kommt vorteilhaft eine 3D-Flechtmaschine zum Einsatz. Die linear erstreckten Textilstränge können als endloses Produkt hergestellt und dabei auch mit wechselnden Querschnitten, Verdickungen, Aufspaltungen und Zusammenführungen versehen sein. Dazu wird bereits beim Herstellen der linear erstreckten Textilstränge die angestrebte Radgröße berücksichtigt. Die linear erstreckten Textilstränge werden dann auf die notwendige Länge zugeschnitten und stehen für eine Weiterverarbeitung zur Verfügung.

Zur Weiterverarbeitung werden bereitgestellte linear erstreckte Textilstränge entweder
a) konsolidiert oder
b) unkonsolidiert
eingesetzt.

Nach a) werden die unkonsolidierten Textilstränge in eine Form eingelegt, die die vorgesehene Krümmung und sonstige Formgebung der Textilstränge vorgibt und anschließend mit Matrixmaterial getränkt bzw. falls das Matrixmaterial in den Textilsträngen enthalten ist, dieses ausgehärtet. Als Matrixmaterial kommt thermoplastisches oder duroplastisches Material zum Einsatz. Besonders bevorzugt als thermoplastisches Material ist Polypropylen und als duroplastisches Material Epoxidharz. Anschließend werden die konsolidierten Textilstränge in eine Form eingelegt, die bereits das erste Nabenteil enthält. Die Enden der Textilstränge reichen bevorzugt in den Felgenbereich hinein. Anschließend wird das zweite Nabenteil eingesetzt und die Form geschlossen. Der Felgenbereich wird anschließend ausgebildet, indem die Form umflochten wird. Anschließend wird der Felgenbereich ebenfalls konsolidiert. nunmehr sind die Textilstränge zwischen Nabe und Felge formschlüssig fixiert.

Nach b) werden die unkonsolidierten Textilstränge in eine Form für die Felge eingelegt, die bereits das erste Nabenteile aufweist. Anschließend wird das zweite Nabenteil eingesetzt und die Form geschlossen. Die Form gibt nunmehr im Außenbereich die Kontur der Felge wieder. Die Enden der Textilstränge reichen bevorzugt in den Felgenbereich hinein. Anschließend wird die Felgenform überflochten. Nach dem Flechtvorgang wird das gesamte Gebilde aus Nabe, Textilsträngen und Felge konsolidiert.

Neben dem Umflechten der Form zur Ausbildung der Felge werden vorteilhaft auch andere, aus dem Stand der Technik bekannte Verfahren zur Faserablage genutzt. Besonders bevorzugt sind hier das Wickeln sowie die Ablage von Prepregs aus Fasermaterial.

### Ausführungsbeispiele

Das erfindungsgemäße Verfahren wird im Folgenden anhand von drei Ausführungsbeispielen erläutert, ohne jedoch die Erfindung auf diese zu beschränken.

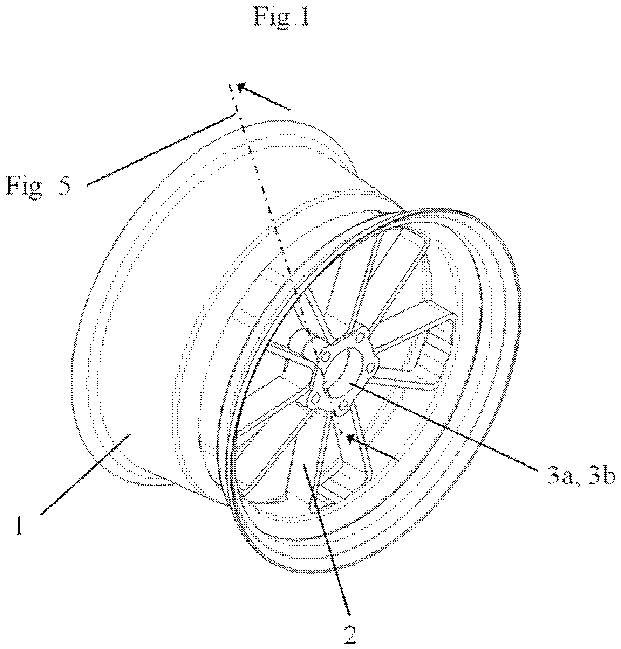

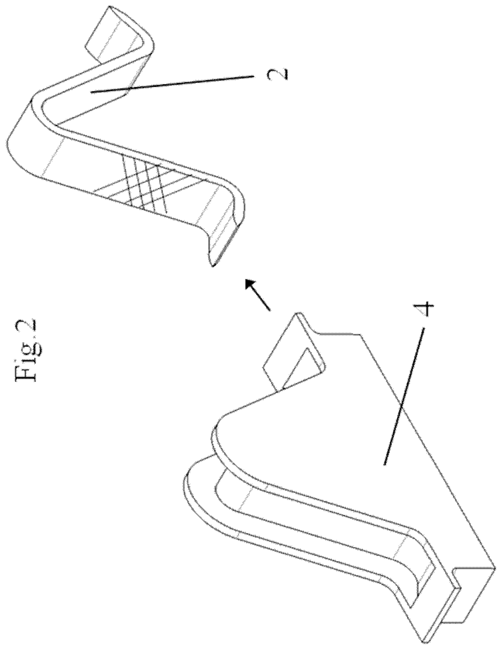

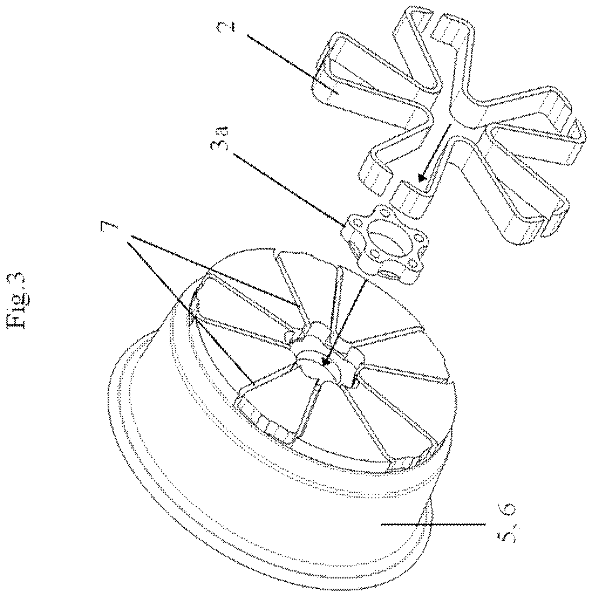

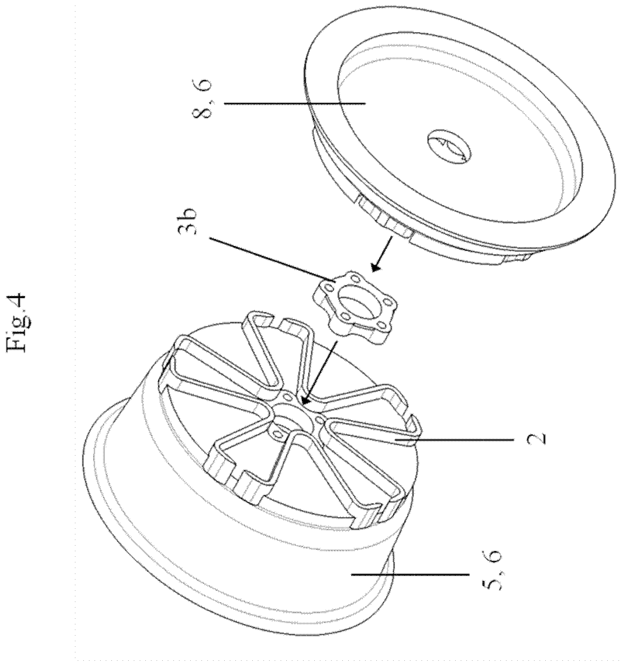

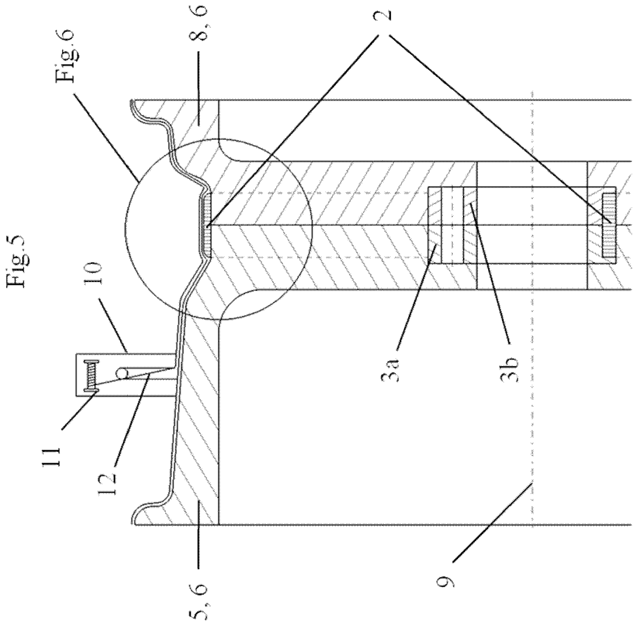

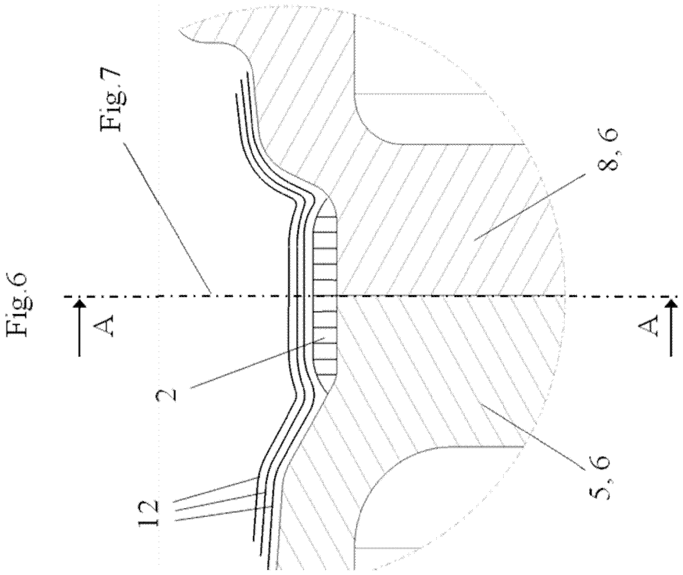

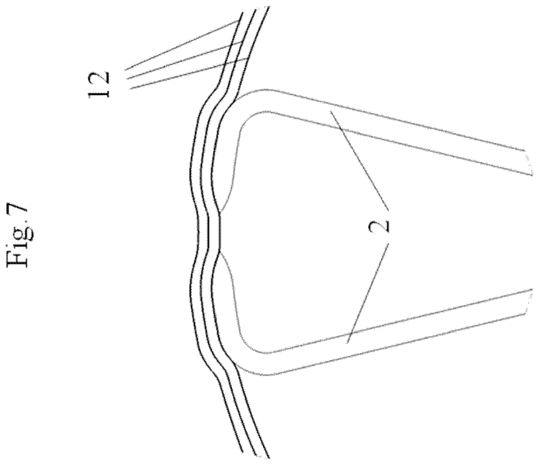

### Ausführungsbeispiel 1 nach Fig. 1, Fig. 2, Fig.3, Fig. 4, Fig. 5, Fig. 6, Fig. 7:

Ein Radstern ist aus einzelnen, vorgeformten Speichensegmenten (2) aufgebaut. Die Formgebung der Speichensegmente (2) erfolgt dabei in separaten Werkzeugformen (4), in welche der längs erstreckte Textilstrang drapiert wird. Dabei besteht im Vorfeld die Möglichkeit einer Konsolidierung der Speichensegmente (2). Anschließend werden das erste Nabenteil (3a) sowie die vorgeformten Speichensemente (2) in die Einlegenuten (7) der ersten Formhälfte (5) der Werkzeugform eingelegt. Nachdem das zweite Nabenteil (3b) aufgebracht ist und die Formhälften (5, 8) geschlossen sind, erfolgt die Ausbildung des Felgenbettes (1) durch Umflechten des als Flechtkern (6) fungierenden Formwerkzeugs (5, 8). Dabei werden die Speichen (2) axial und radial über einen Formschluss in die textile Struktur des Felgenbettes (1) integriert. Für die Verpressung der textilen Preform während der Konsolidierung kommt im Bereich des Felgenbettes (1) ein mehrteiliges Außenwerkzeug zum Einsatz. Nach der Konsolidierung weisen Radstern und Felgenbett eine form- und stoffschlüssige Verbindung auf.

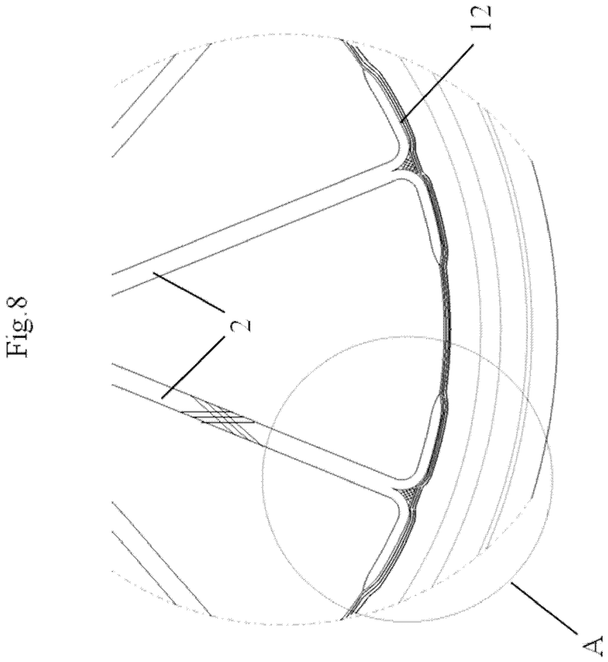

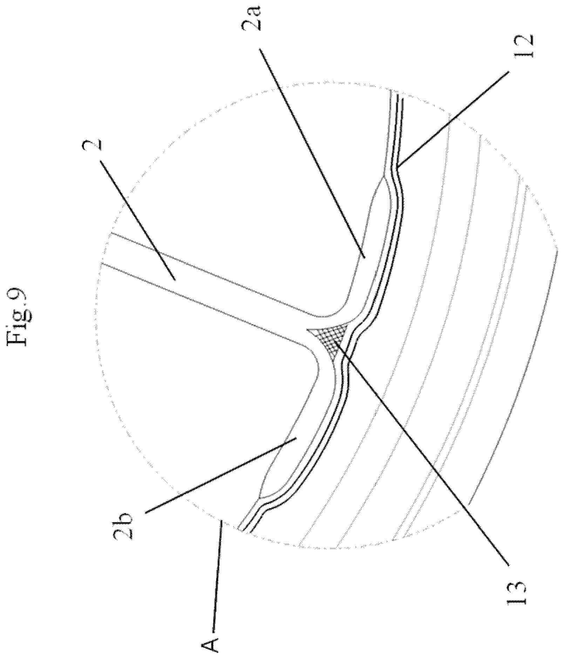

### Ausführungsbeispiel 2 nach Fig. 8, Fig. 9

Die Speichen (2) des Radsterns entstehen durch Drapieren des unkonsolidierten längserstreckten Textilstrangs in die Formhälfte 1 der Felgenwerkzeugform, sowie der darin eingelegten Radnabenhälfte 1. Um einen möglichst großen Anbindungsbereich zwischen Speichen und Felgenbett zu gewährleisten, erfolgt dabei ein beidseitiges Auffspreizen der Enden des für die Speichen verwendeten Textilstrangs im Bereich des Felgenbettes. Die dadurch entstehende V-förmige Aussparung zwischen den aufgespreizten textilen Schichten wird mittels eines keilförmigen Einlegers geschlossen. Nachdem die Radnabenhälfte 2 aufgebracht ist und die Formhälften geschlossen sind, erfolgt die Ausbildung des Felgenbettes durch Umflechten des als Flechtkern fungierenden Formwerkzeugs. Dabei werden die Speichen axial und radial über einen hinterschnittig ausgebildeten Formschluss in die textile Struktur des Felgenbettes integriert. Für die Verpressung der textilen Preform während der Konsolidierung kommt im Bereich des Felgenbettes ein mehrteiliges Außenwerkzeug zum Einsatz. Nach der Konsolidierung weisen Radstern und Felgenbett eine form- und stoffschlüssige Verbindung auf.

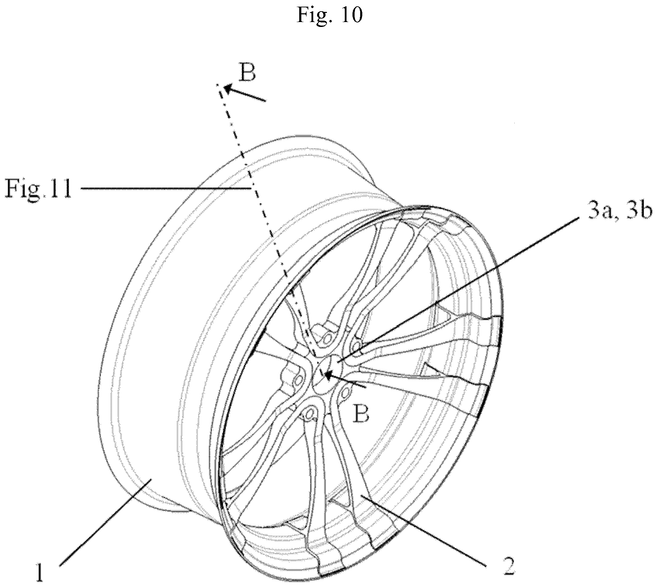

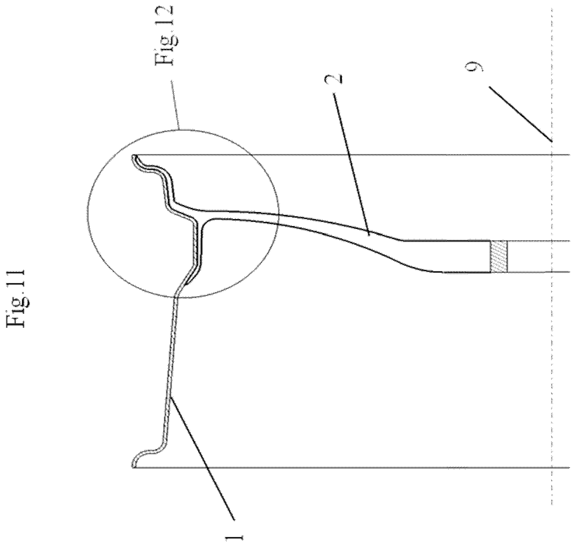

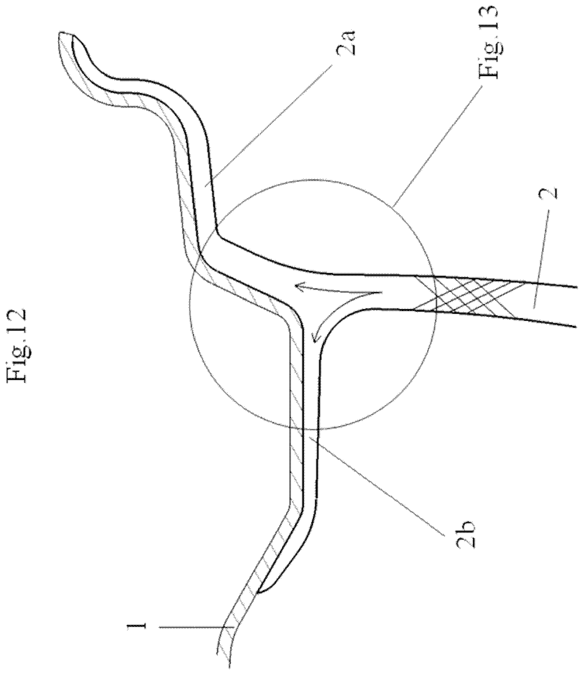

### Ausführungsbeispiel 3 nach Fig. 10, Fig. 11, Fig. 12, Fig. 13, Fig. 14, Fig. 15, Fig. 16:

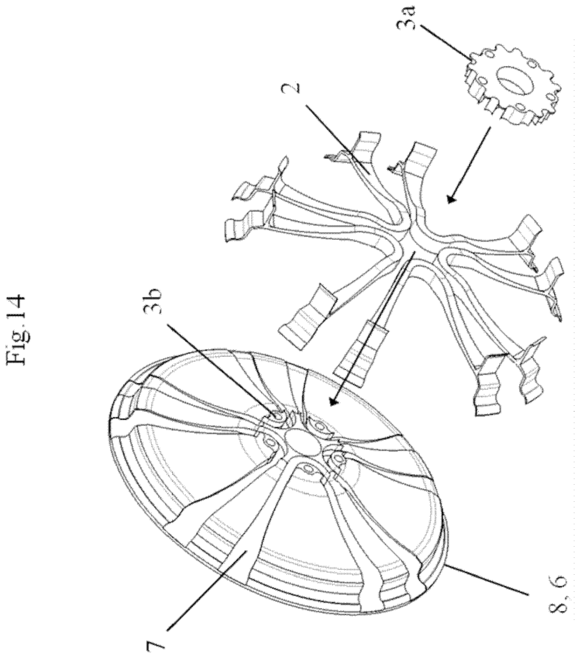

Die Anbindung des längs erstreckten Textilstrangs an das Felgenbett erfolgt mittels eines hinterschnittig ausgebildeten Formschlusses, wobei sich das Textil axial über das Tiefbett sowie die äußere Horngeometrie des Felgenbettes erstreckt. In Fig. 14 ist dargestellt, wie die längs erstreckten Textilstränge gemeinsam mit einem Formteil für die Nabe in der Form drapiert werden.

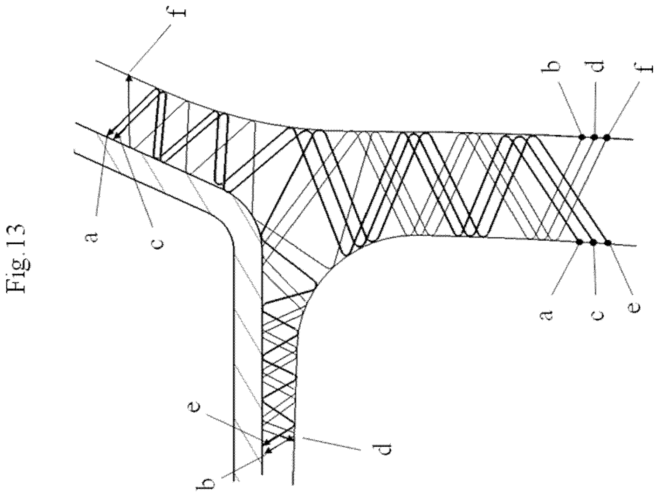

Fig. 13 verdeutlicht, wie der Faserverlauf der Fasern (a-f) ohne Unterbrechung aus dem einteiligen mittleren Abschnitt in das aufgespreizte Ende des Textilstranges übergeht. In dem ungeteilten Abschnitt des Textilstranges verlaufen die Fasern hier in Winkeln von +45° (e, c, e) sowie -45° (b, d, f) zur Achse des Textilstrangs. Nach dem Aufteilen und Aufspreizen weist der erste Teil die Fasern b, d und e und der zweite Teilstrang die Fasern a, c und f auf. Die Fasern verlaufen auch nach der Aufteilung weiterhin in Winkeln von +-45° zur Achse des jeweiligen Teilstrangs.

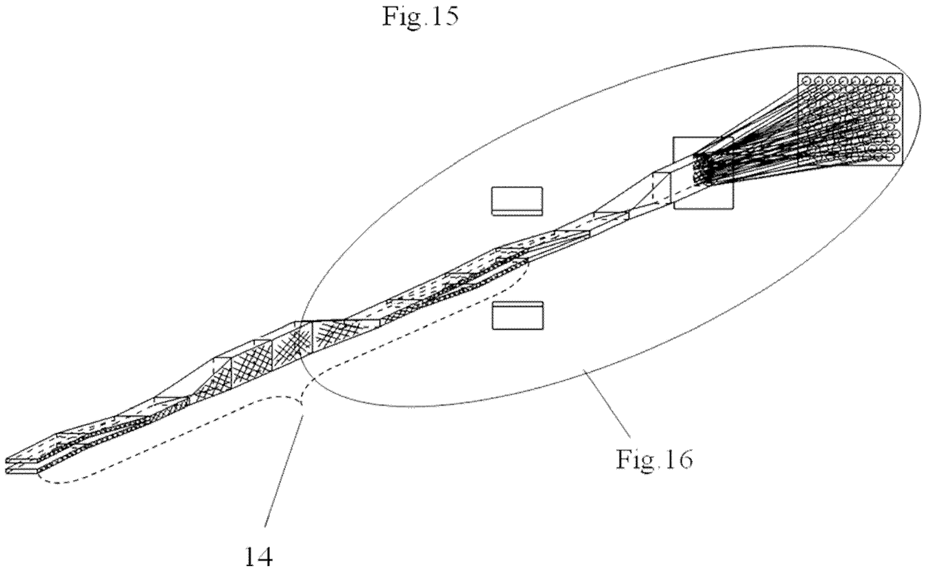

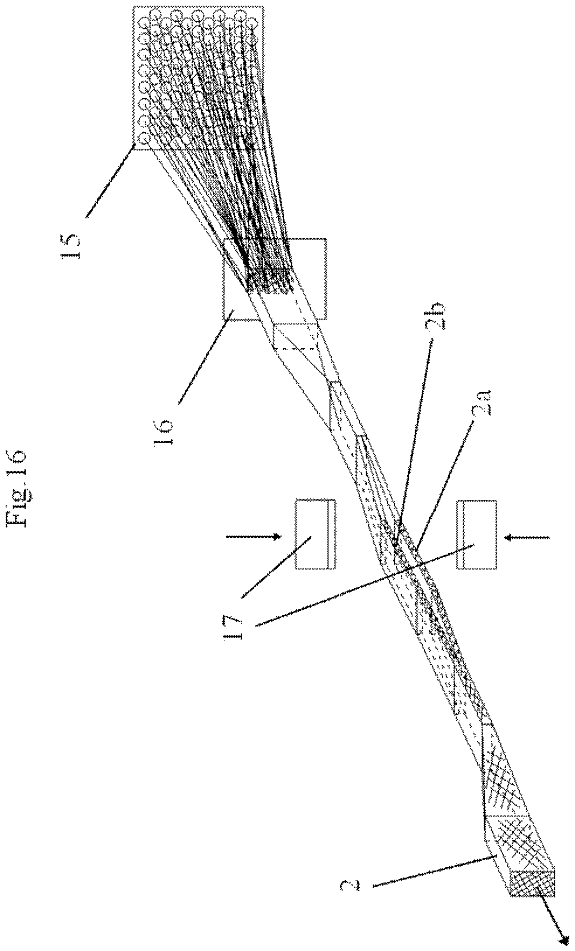

Die längs erstreckten Textilstränge der Speichensegmente weisen unterschiedliche Querschnitte auf, die einer belastungsgerechten Gestaltung des Radsterns dienen. Das Preforming der Speichensegmente mit unterschiedlichen Querschnitten sowie der Auffächerung der Speichen-Enden in jeweils zwei Faserstränge (2a, 2b) wird mittels einer 3D-Flechtmaschine realisiert (Fig. 15). Dies ermöglicht die Herstellung eines endlosen 3D-Textils, welches aus mehreren aneinander gereihten Speichensegmenten besteht, die durch eine Trennvorrichtung nach dem Stand der Technik (bspw. Hebelschere, automatischer Cutter) voneinander getrennt werden (Fig. 16 als Vergrößerung des Ausschnitts C von Fig. 15).

### Bezugszeichenliste

- 1: Felgenbett
- 2: Speichensegmente aus längs erstreckten Textilsträngen
- 2a: Speichen-Ende a
- 2b: Speichen-Ende b
- 3a: erstes Nabenteil
- 3b: zweites Nabenteil
- 4: Werkzeug Speichensegmente
- 5: erste Formhälfte
- 6: Flechtkern
- 7: Einlegenuten
- 8: zweite Formhälfte
- 9: Symmetrieachse
- 10: Radialflechtmaschine
- 11: Flechtklöppel
- 12: Flechtfaden
- 13: keilförmiger Einleger
- 14: Klöppelfeld der 3D - Flechtmaschine
- 15: Matrize
- 16: Trennvorrichtung
- a-f: Fasern

## Patentansprüche

1. Rad mit Felge sowie Radstern, aufweisend Nabe und Speichen (2), wobei die Speichen (2) aus einem oder mehreren linear erstreckten Textilsträngen, mit jeweils mindestens zwei Enden, die nicht miteinander verbunden sind, als Verstärkungsmaterial eines Faserverbundwerkstoffs bestehen und jeder linear erstreckte Textilstrang mindestens einmal unterbrechungsfrei von der Felge (1) zur Nabe und zurück verläuft und so mindestens eine Speiche (2) ausbildet, und
- die linear erstreckten Textilstränge Enden (2a, 2b) aufweisen, die in einer Ebene parallel zur Achse des Rades geteilt, aufgespreizt und in zwei Drehrichtungen des Rades in der Felge formschlüssig befestigt sind, oder
- die linear erstreckten Textilstränge Enden (2a, 2b) aufweisen, die in einer Ebene senkrecht zur Achse des Rades geteilt, aufgespreizt und der Kontur der Innenseite der Felge in axialer Richtung folgend an dieser angelegt sind und so eine formschlüssige Befestigung bewirken.

2. Rad nach Anspruch 1, **dadurch gekennzeichnet, dass** die Verbindung zwischen Speichen (2) und Felge und/oder Speichen (2) und Nabe formschlüssig und/oder stoffschlüssig erfolgt.

3. Rad nach Anspruch 1 oder 2, **dadurch gekennzeichnet, dass** jeder linear erstreckte Textilstrang um stiftförmige Erhebungen in der Nabe herum verläuft.

4. Rad nach Anspruch 1 oder 2, **dadurch gekennzeichnet, dass** der linear erstreckte Textilstrang durch Ausnehmungen in der Nabe verläuft.

5. Rad nach einem der vorhergehenden Ansprüche, **dadurch gekennzeichnet, dass** mindestens einer der linear erstreckten Textilstränge mehr als zwei Speichen (2) ausbildet und dazu ein Abschnitt dieses linear erstreckten Textilstrangs, der nicht mit den Enden identisch ist, in der Innenoberfläche der Felge und abschließend mit dieser verläuft.

6. Rad nach einem der vorhergehenden Ansprüche, **dadurch gekennzeichnet, dass**, wenn die linear erstreckten Textilstränge Enden (2a, 2b) aufweisen, die in einer Ebene parallel zur Achse des Rades geteilt, aufgespreizt und in zwei Drehrichtungen des Rades in der Felge formschlüssig befestigt sind, an der Stelle, an der ein Ende jedes linear erstreckten Textilstrangs aufgespreizt ist, ein im Querschnitt dreieckiger Freiraum entsteht, in den ein formidealer Formkörper (13) eingefügt wird.

7. Verfahren zur Herstellung eines Rades mit einem Radstern, dessen Speichen (2) aus einem oder mehreren linear erstreckten Textilsträngen als Verstärkungsmaterial eines Faserverbundwerkstoffs bestehen, wobei die folgenden Schritte ausgeführt werden:
a. Bereitstellen eines der Felgenkontur entsprechenden Formwerkzeugs aufweisend einen ersten und einen zweiten Formteil (5, 8), welche Aussparungen zur Abbildung des Radsterns aufweist,
b. Bereitstellen der linear erstreckten Textilstränge mit jeweils mindestens zwei Enden, die nicht miteinander verbunden sind,
c. Einlegen eines ersten Radnabenteils (3a) in das erste Formteil (5), so dass sich ein durchgehender Verlauf der Form der Speichensegmente (2) abbildet,
d. Einlegen der unkonsolidierten linear erstreckten Textilstränge in das erste Formteil (5), so dass mindestens die Enden der linear erstreckten Textilstränge hinterschnittig in den ersten Formteil eingebunden sind und die linear erstreckten Textilstränge durch die Nabe verlaufen,
e. Einlegen des zweiten Nabenteils (3b),
f. Schließen des Formwerkzeugs durch Zusammenfügen des ersten und zweiten Formteils (5, 8),
g. Ausbildung der Verstärkungsfaserstruktur der Felge durch weitere Faserablage auf das Formwerkzeug,
h. Gemeinsame Konsolidierung der Felge und des Radsterns,
i. Entformen des Rades.

8. Verfahren zur Herstellung eines Rades mit einem Radstern, dessen Speichen (2) aus einem oder mehreren linear erstreckten Textilsträngen als Verstärkungsmaterial eines Faserverbundwerkstoffs bestehen, wobei die folgenden Schritte ausgeführt werden:
a. Bereitstellen eines der Felgenkontur entsprechenden Formwerkzeugs aufweisend einen ersten und einen zweiten Formteil (5, 8), welche Aussparungen zur Abbildung des Radsterns aufweist,
b. Bereitstellen der linear erstreckten Textilstränge mit jeweils mindestens zwei Enden, die nicht miteinander verbunden sind,
c. Einlegen eines ersten Radnabenteils (3a) in das erste Formteil (5), so dass sich ein durchgehender Verlauf der Form der Speichensegmente abbildet,
d. Einlegen der bereits konsolidierten oder vorkonsolidierten linear erstreckten Textilstränge in das erste Formteil (5), so dass mindestens die Enden der linear erstreckten Textilstränge hinterschnittig in den ersten Formteil (5) eingebunden sind und die linear erstreckten Textilstränge durch die Nabe verlaufen,
e. Einlegen des zweiten Nabenteils (3b),
f. Schließen des Formwerkzeugs durch Zusammenfügen des ersten und zweiten Formteils (5, 8),
g. Ausbildung der Verstärkungsfaserstruktur der Felge durch Faserablage auf das Formwerkzeug,
h. Gemeinsame Konsolidierung der Felge und des Radsterns,
i. Entformen des Rades.

## Claims

1. A wheel, comprising a rim, as well as a wheel spider having a hub and spokes (2), said spokes (2) comprising one or more linearly stretched textile strands, having at least two ends that are not connected to each other, as reinforcement material of a fiber composite and each linearly stretched textile strand extending at least once from the rim (1) to the hub and back without interruption to form at least one spoke (2), and
- the linearly stretched textile strands have ends (2a,2b), which are divided in a plane parallel to an axis of the wheel, spread apart and fastened in a positive-locking manner in two directions of rotation of the wheel in a well, or
- the linearly stretched textile strands have ends (2a, 2b), which are divided in a plane vertical to an axis of the wheel, spread apart and are joined to a contour of the inner side of the rim in an axial direction following the rim to bring about a positive-locking fastening.

2. A wheel in accordance with claim 1, **characterized in that** the spokes (2) and the rim and/or the spokes (2) and the hub are connected in a positive-locking manner and/or in substance.

3. Wheel in accordance with claim 1 or 2, **characterized in that** each linearly stretched textile strand runs around pin-like elevations in the hub.

4. Wheel in accordance with claim 1 or 2, **characterized in that** the linearly stretched textile strand runs through recesses in the hub.

5. Wheel in accordance with one of the above claims, **characterized in that** at least one of the linearly stretched textile strands forms more than two spokes (2) and, for this, one section of this linearly stretched textile strand, which is not identical with the ends, runs in the inner surface of the well and ends with this well.

6. Wheel in accordance with one of the above claims, **characterized in that** at the site, at which one end of each linearly stretched textile strand is spread apart, a free space having a triangular cross section is formed, into which an ideally shaped molding (13) is inserted.

7. Process for the manufacture of a wheel with a wheel spider, whose spokes consist of one or more linearly stretched textile strands as reinforcement material of a fiber composite, **characterized in that** the following steps are carried out:
a. Providing a mold corresponding to the rim contour having a first and a second mold part (5,8), which has recesses for forming the wheel spider,
b. Providing the linearly stretched textile strands having at least two ends that are not connected to each other,
c. Insertion of a first wheel hub part (3a) into the first mold part (5), such that a continuous course of the shape of the spoke segments (2) is imaged,
d. Insertion of the unconsolidated linearly stretched textile strands into the first mold part (5), such that at least the ends of the linearly stretched textile strands are integrated into the first mold part in an undercut area and the linearly stretched textile strands run through the hub,
e. Insertion of the second hub part (3b),
f. Closing of the mold by joining the first and second mold parts (5,8) together,
g. Formation of the reinforcement fiber structure of the rim by means of further deposition of fibers onto the mold,
h. Joint consolidation of the rim and the wheel spider,
i. Removal of the wheel from the mold.

8. Process for the manufacture of a wheel with a wheel spider, whose spokes (2) consist of one or more linearly stretched textile strands as reinforcement material of a fiber composite, **characterized in that** the following steps are carried out:
a. Providing a mold corresponding to the rim contour having a first and a second mold part (5,8), which has recesses for forming the wheel spider,
b. Providing the linearly stretched textile strands having at least two ends that are not connected to each other,
c. Insertion of a first wheel hub part (3a) into the first mold part (5), such that a continuous course of the shape of the spoke segments is imaged,
d. Insertion of the already consolidated or pre-consolidated linearly stretched textile strands into the first mold part (5), such that at least the ends of the linearly stretched textile strands are integrated into the first mold part (5) in an undercut area and the linearly stretched textile strands run through the hub,
e. Insertion of the second hub part (3b),
f. Closing of the mold by means of joining the first and second mold parts (5,8) together,
g. Formation of the reinforcement fiber structure of the rim by means of the deposition of fibers onto the mold,
h. Joint consolidation of the rim and the wheel spider,
i. Removal of the wheel from the mold.

## Revendications

1. Roue comportant une jante ainsi qu'une étoile de roue, comportant un moyeu et des rayons (2), les rayons (2) étant constitués d'au moins un écheveau textile étendu linéairement, comportant chacun au moins deux extrémités qui ne sont pas reliées entre elles, en tant que matière de renforcement d'un matériau composite renforcé par des fibres et chaque écheveau textile étendu linéairement s'étendant au moins une fois sans interruption de la jante (1) au moyeu et inversement, et formant ainsi au moins un rayon (2), et
- les écheveaux textiles étendus linéairement comportant des extrémités (2a, 2b) qui sont écartées, en étant séparées, dans un plan parallèle à l'axe de la roue, et fixés par complémentarité de formes dans la jante dans deux sens de rotation de la roue, ou
- les écheveaux textiles étendus linéairement comportant des extrémités (2a, 2b) qui sont écartées, en étant séparées dans un plan perpendiculaire à l'axe de la roue, et appliqués sur la jante en suivant le contour du côté intérieur de la jante dans la direction axiale et réalisent ainsi une fixation par complémentarité de formes.

2. Roue selon la revendication 1, **caractérisée en ce que** le raccordement entre les rayons (2) et la jante et/ou entre les rayons (2) et le moyeu s'effectue par complémentarité de formes et/ou par liaison de matière.

3. Roue selon la revendication 1 ou 2, **caractérisée en ce que** chaque écheveau textile étendu linéairement s'étend autour de surélévations en forme de tige dans le moyeu.

4. Roue selon la revendication 1 ou 2, **caractérisée en ce que** l'écheveau textile étendu linéairement s'étend à travers des évidements ménagés dans le moyeu.

5. Roue selon l'une des revendications précédentes, **caractérisée en ce qu'**au moins un des écheveaux textiles étendus linéairement forme plus de deux rayons (2) et de plus une section de cet écheveau textile étendu linéairement, qui n'est pas identique aux extrémités, s'étend dans la surface intérieure de la jante et s'étend pour finir avec celle-ci.

6. Roue selon l'une des revendications précédentes, **caractérisée en ce que**, lorsque les écheveaux textiles étendus linéairement comportent des extrémités (2a, 2b) qui sont écartées en étant séparées, dans un plan parallèle à l'axe de la roue et sont fixés par complémentarité de formes dans la jante dans deux sens de rotation de la roue, au niveau duquel une extrémité de chaque écheveau textile étendu linéairement est écarté, un espace libre triangulaire en coupe transversale apparaît dans lequel un corps moulé (13) de forme idéale est inséré.

7. Procédé de fabrication d'une roue comportant une étoile de roue dont les rayons (2) sont constitués d'au moins un écheveau textile étendu linéairement en tant que matière de renforcement d'un matériau composite renforcé par des fibres, ledit procédé comportant les étapes suivantes :
a. prévoir un outil de moulage correspondant au contour de la jante et comportant une première et une seconde pièce moulée (5, 8), laquelle comporte des cavités destinés à former l'étoile de roue,
b. prévoir les écheveaux textiles étendus linéairement comportant chacun au moins deux extrémités qui ne sont pas reliées entre elles,
c. insérer une première partie du moyeu de roue (3a) dans la première pièce moulée (5) de sorte que se forme une allure continue de la forme des segments de rayon (2),
d. insérer les écheveaux textiles étendus linéairement non consolidés dans la première pièce moulée (5) de sorte qu'au moins les extrémités des écheveaux textiles étendus linéairement sont intégrés en contre-dépouille dans la première pièce moulée et les écheveaux textiles étendus linéairement se déroulent par le moyeu,
e. insérer la seconde partie de moyeu (3b),
f. fermer l'outil de moulage par assemblage de la première et de la seconde pièce moulée (5, 8),
g. former la structure de fibres de renforcement de la jante par d'autres dépôts de fibres sur l'outil de moulage,
h. consolider conjointement la jante et l'étoile de roue,
i. démouler la roue.

8. Procédé de fabrication d'une roue comportant une étoile de roue dont les rayons (2) sont constitués d'au moins un écheveau textile étendu linéairement en tant que matière de renforcement d'un matériau composite renforcé par des fibres, ledit procédé comportant les étapes suivantes :
a. prévoir un outil de moulage correspondant au contour de la jante et comportant une première et une seconde pièce moulée (5, 8), laquelle comporte des cavités destinées à former l'étoile de roue,
b. prévoir les écheveaux textiles étendus linéairement comportant chacun au moins deux extrémités qui ne sont pas reliées entre elles,
c. insérer une première partie du moyeu de roue (3a) dans la première pièce moulée (5) de sorte que se forme une allure continu de la forme des segments de rayon,
d. insérer les écheveaux textiles étendus linéairement déjà consolidés ou pré-consolidés dans la première pièce moulée (5) de sorte qu'au moins les extrémités des écheveaux textiles étendus linéairement sont intégrés en contre-dépouille dans la première pièce moulée (5) et les écheveaux textiles étendus linéairement s'étendent à travers le moyeu,
e. insérer la seconde partie du moyeu (3b),
f. fermer l'outil de moulage par assemblage de la première et de la seconde pièce moulée (5, 8),
g. former la structure de fibres de renforcement de la jante par dépôts de fibres sur l'outil de moulage,
h. consolider conjointement la jante et l'étoile de roue,
i. démouler la roue.
